# EUROPÄISCHE PATENTANMELDUNG

(11) **EP 1 072 509 A1**
(43) Veröffentlichungstag der Anmeldung: **31.01.2001**
(21) Anmeldenummer: 00115903.7
(22) Anmeldetag: 25.07.2000
(51) Int. Cl.: B65B 1/28, B65G 69/18

(54) **Vorrichtung zur gasdichten Abdichtung**

(30) Priorität: 26.07.1999 DE 19934148; 26.07.1999 DE 19934147; 26.07.1999 DE 19934149
(71) Anmelder: Neuhäuser GmbH, Umwelt-, Dosier- und Transporttechnologie, 44532 Lünen (DE)
(72) Erfinder: Siepert, Fredy, 59394 Nordirchen (DE)
(74) Vertreter: COHAUSZ HANNIG DAWIDOWICZ & PARTNER

(57) **Zusammenfassung**

Die Erfindung betrifft eine Vorrichtung zur gasdichten Abdichtung zwischen einer Zuführung für fließfähige Medien oder rieselfähiges Schüttgut und einem Behälter 1, in den das Medium bzw. das Schüttgut insbesondere nach einem vorbestimmten Gewicht abgefüllt wird, umfassend ein Aufnahmeelement 7, an das die Einfüllöffnung eines Behälters 1 abgedichtet anschließbar ist, und eine Zuführeinrichtung 10, die von oben in das Aufnahmeelement eingreift, wobei das Aufnahmeelement 7 eine die Zuführeinrichtung 10 umgebende und nach oben geöffnete Ausnehmung 11 aufweist, in die eine Flüssigkeit 12 gefüllt ist, und daß die Zuführeinrichtung 10 eine nach unten gerichtete, über den gesamten Umfang der Ausnehmung 11 sich erstreckende Dichtlippe 14 aufweist, die in die Flüssigkeit 12 eintaucht.

## Beschreibung

Die vorliegende Erfindung betrifft eine Vorrichtung zur gasdichten Abdichtung zwischen einer Zuführung für fließfähige Medien oder rieselfähigem Schüttgut und einem Behälter, in den das Medium bzw. das Schüttgut, insbesondere nach einem vorbestimmten Gewicht abgefüllt wird, umfassend ein Aufnahmeelement, an das die Einfüllöffnung eines Behälters abgedichtet anschließbar ist, und eine Zuführeinrichtung, die von oben in das Aufnahmeelement eingreift.

Derartige Vorrichtungen sind allgemein bekannt. Sie werden insbesondere in der Pharma-, Chemie- und Lebensmittelindustrie zum Abfühlen von fließ- oder schüttfähigen Stoffen in Behälter oder Verpackungen eingesetzt. Insbesondere bei der Abfüllung von Pulvern ist eine staubdichte und gasdichte Abdichtung von großer Bedeutung, um einerseits das Entweichen von Pulverpartikeln an die Umgebung zu vermeiden und andererseits eine Beeinflussung des abgefüllten Pulvers durch Umgebungseinflüsse zu verhindern.

Die Menge des in einen Behälter abzufüllenden Stoffes bestimmt sich häufig nach dem Gewicht, so daß der Behälter während der Zuführung des Stoffes kontinuierlich gewogen wird. Hierbei ist insbesondere bei teuren Schüttgütern die Genauigkeit des Wiegevorgangs von entscheidender Bedeutung. Bereits geringe Abweichungen in der abgefüllten Menge können dabei erhebliche finanzielle Nachteile bedeuten.

Üblicherweise wird bei Vorrichtungen der eingangs genannten Art die Dichtfunktion durch Faltenbälge ausgeführt, wie es beispielsweise aus der EP 0 188 478 bekannt ist. Diese Faltenbälge bringen zusätzliches Gewicht auf die Waage, das nicht immer konstant ist. Schon bei geringsten Wegverschiebungen zwischen der Zuführeinrichtung und dem Aufnahmeelement variiert der durch einen Faltenbalg auf die Waage ausgeübte Druck in nicht unerheblicher Weise. Zusätzlich kann es durch Umgebungseinflüsse, insbesondere durch Zugluft auf die einzelnen Falten des Faltenbalges zu Wägeverfälschungen kommen.

Ferner ist es bekannt, Vorrichtungen der eingangs genannten Art über konstruktiv relativ aufwendige Spaltgeometrien, insbesondere über Labyrinthdichtungen abzudichten. Hierbei muß jedoch die aus den Behälter durch das herabströmende Produkt verdrängte Luft abgesaugt werden, wobei der abgesaugte Luftstrom ebenfalls zu einer erheblichen Verfälschung des Wägeergebnisses führen kann. Außerdem wird zur Bereitstellung der erforderlichen Absaugleistung zusätzliche Energie benötigt.

Aufgabe der vorliegenden Erfindung ist es daher, eine leicht handhabbare und preiswert herzustellende Vorrichtung der eingangs genannten Art zu schaffen, die die zuvor genannten Nachteile vermeidet und die bei einfacher Konstruktion allenfalls eine minimale Wägeverfälschung verursacht.

Diese Aufgabe wird erfindungsgemäß durch eine Vorrichtung nach Anspruch 1 gelöst. Wesentlich ist dabei, daß das Aufnahmeelement eine die Zuführeinrichtung umgebende und nach oben geöffnete Ausnehmung aufweist, in die eine Flüssigkeit gefüllt ist, und daß die Zuführeinrichtung eine nach unten gerichtete, über den gesamten Umfang der Ausnehmung sich erstreckende Dichtlippe aufweist, die in die Flüssigkeit eintaucht.

Der wesentliche Vorteil der erfindungsgemäßen Vorrichtung besteht darin, daß eine bezüglich der Wiegegenauigkeit optimale Entkopplung von Aufnahmeelement und Zuführeinrichtung erreicht wird. Diese Entkopplung vermeidet einen Kraftschluß zwischen dem Aufnahmeelement und der Zuführeinrichtung, so daß Wägeverfälschungen in der bei den bekannten Dichtvorrichtungen bisher auftretenden Größenordnung ausgeschlossen sind. Lediglich durch den Auftrieb der Dichtlippe in der Flüssigkeit wird eine geringe zusätzliche Kraft auf die Waage aufgebracht, die jedoch bei den an Wägezellen allenfalls in extrem geringen Maßen auftretenden Wegverschiebungen praktisch konstant bleibt. Wägeverfälschungen treten dabei nicht mehr oder allenfalls in so extrem geringem Maße auf, daß sie vernachlässigbar sind.

Die erfindungsgemäße Vorrichtung zeichnet sich aufgrund der einfachen geometrischen Verhältnisse sowohl durch eine leichte Handhabbarkeit als auch durch eine einfache Konstruktion sowie durch eine kostengünstige Herstellbarkeit aus. Durch das Eintauchen der Dichtlippe in die Flüssigkeit wird eine absolut staub- und gasdichte Abdichtung zwischen dem Aufnahmeelement bzw. dem daran befestigten Behälter und der Zuführeinrichtung bzw. einer gegebenenfalls davor angeordneten Anlagenkomponente erreicht.

In einer bevorzugten Ausführungsform der Erfindung umfaßt die Zuführeinrichtung einen Trichter mit einem in das Aufnahmeelement eingreifenden Stutzen. Dabei ist es auch möglich, daß die Zuführeinrichtung durch Teile einer oberhalb der Vorrichtung angeordneten Komponente, beispielsweise durch Teile einer Dosiereinrichtung oder eines großen Vorratsbehälters gebildet ist.

Besonders vorteilhaft ist es, wenn die Dichtlippe an die Zuführeinrichtung, insbesondere an den gegebenenfalls vorhandenen Trichter angeformt ist. Die Dichtlippe kann dabei auf besonders einfache Weise durch einen nach unten gerichteten Kragen oder Stutzen einstückig mit der Zuführeinrichtung ausgebildet sein. In anderen Ausführungsformen ist es jedoch auch möglich, die Dichtlippe als separates Bauteil abgedichtet an der Zuführeinrichtung anzuordnen.

In einer weiteren bevorzugten Ausführungsform der Erfindung ist an der Zuführeinrichtung mindestens ein Abluftstutzen vorgesehen, durch den die beim Befüllen aus einem Behälter entweichende Luft abführbar ist. Günstig ist es dabei, wenn der Abluftstutzen in eine Abluftleitung übergeht, die von oben in einen oberhalb der Vorrichtung vorgesehen Vorratsbehälter mündet. Auf diese Weise gehen auch kleinste Partikel eines abzufüllenden Pulvers nicht an die Umgebung verloren, sondern sie stehen in dem Vorratsbehälter erneut zur Abfüllung bereit. Aufgrund der einfachen Spaltgeometrie wird hierbei keine Absaugleistung benötigt.

Besonders vorteilhaft ist es ferner, wenn an dem Aufnahmeelement Mittel zum Anhängen eines Behälters derart vorgesehen sind, daß der Behälter von dem Aufnahmeelement getragen ist. Derartige Mittel können vorzugsweise durch einen pneumatisch betätigbaren Dichtschlauch gebildet sein, der den angehängten Behälter, insbesondere einen Sack oder eine Tüte gegen einen äußeren Ring anpreßt.

Besonders vorteilhaft ist es weiterhin, wenn in die erfindungsgemäße Vorrichtung eine Wägeeinrichtung, insbesondere eine sogenannte Wägezelle zum Wiegen des in einem Behälter abgefüllten Produktes integriert ist. Hierdurch kann eine besonders kompakte Bauweise erreicht werden.

Besonders kostengünstig ist die erfindungsgemäße Vorrichtung bzw. ihr Betrieb, wenn die Flüssigkeit Wasser, vorzugsweise destilliertes Wasser ist.

Je nach Art des abzudichtenden Mediums bzw. Schüttgutes kann auch der Einsatz einer antiseptischen Flüssigkeit, eines Öls oder einer Wasser-Öl-Emulsion sein.

Weitere Vorteile und Merkmale der Erfindung ergeben sich aus der nachfolgenden Beschreibung und den in den Zeichnungen dargestellten Ausführungsbeispielen.

Es zeigen
- Figur 1:: Schematische Darstellung einer erfindungsgemäßen Vorrichtung mit weiteren Komponenten einer Abfüllanlage
- Figur 2:: Teilgeschnittene Seitenansicht einer erfindungsgemäßen Vorrichtung

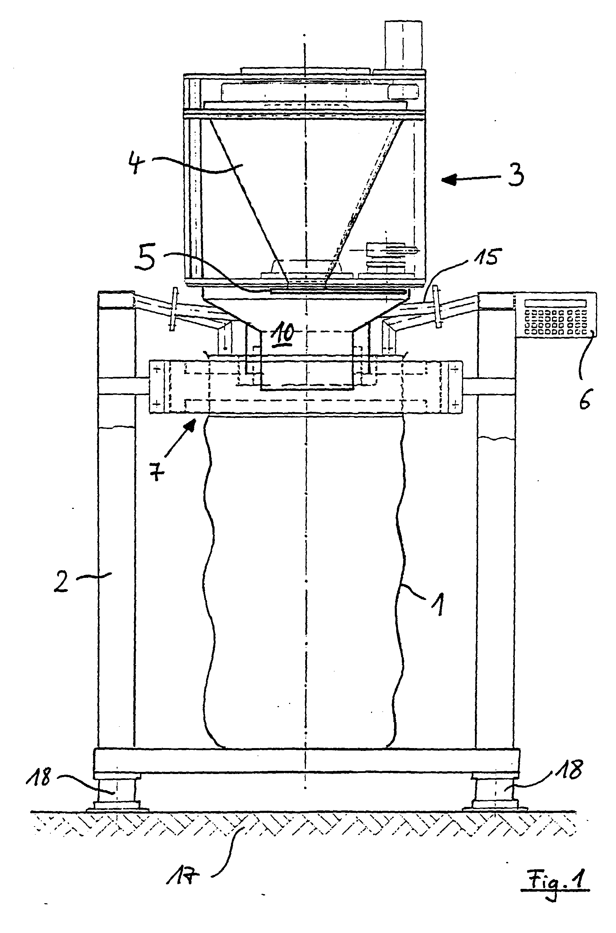

Die in Figur 1 gezeigte Abfüllanlage dient dazu, rieselfähiges Schüttgut, insbesondere Pulver aus einem oberen nicht näher gezeigten großen Vorratsbehälter in exakt dosierten Mengen staubfrei in Behälter 1, beispielsweise in Tüten oder Säcke abzufüllen. Die Anlage, die insbesondere in der Pharma-, Chemie- oder Lebensmittelindustrie eingesetzt werden kann, umfaßt ein Gestell 2, das die erfindungsgemäße Vorrichtung, sowie eine darüber angeordnete Dosiereinrichtung 3 trägt. Die Dosiereinrichtung 3 weist einen Trichter 4 auf, dessen untere Auslaßöffnung durch ein Absperrorgan 5 verschließbar oder freigebbar ist. Oberhalb der Dosiereinrichtung 3 befindet sich ein nicht näher dargestellter großer Vorratsbehälter, in dem das abzufüllende Schüttgut gelagert ist.

An die erfindungsgemäße Vorrichtung ist als Behälter 1 ein Sack angehängt, in den das abzufüllende Schüttgut in einer an einem Wägeterminal 6 vorprogrammierbaren Gewichtsmenge eingefüllt wird. Sobald die gewünschte Menge erreicht ist, wird das Absperrorgan 5 der Dosiereinrichtung 3 geschlossen, so daß der gefüllte Behälter 1 entfernt und ein neuer, leerer Behälter 1 für den nächsten Dosiervorgang angekoppelt werden kann.

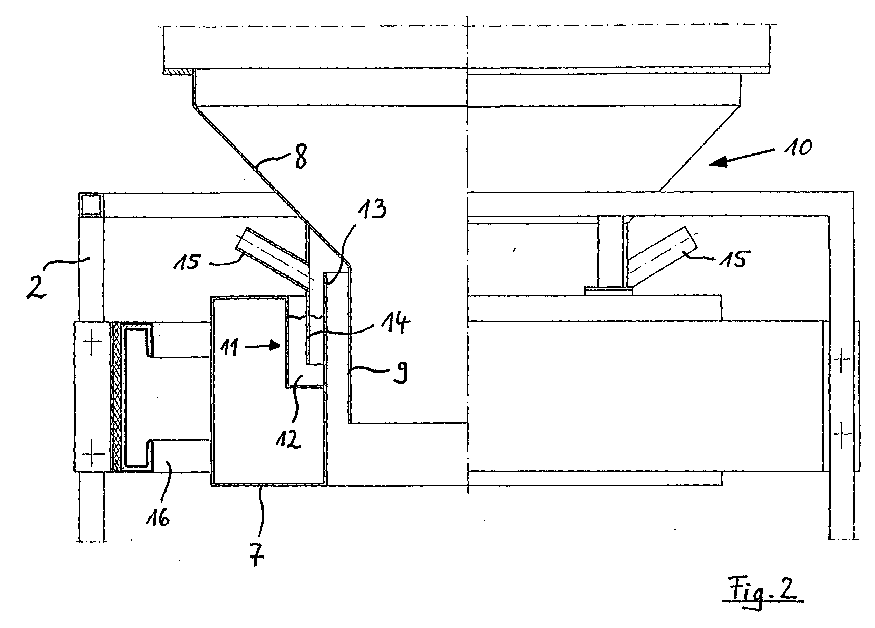

Die in Figur 2 näher dargestellte erfindungsgemäße Vorrichtung umfaßt ein ringförmiges Aufnahmeelement 7 sowie eine im wesentlichen aus einem Trichter 8 mit einem unteren Stutzen 9 bestehende Zuführeinrichtung 10. Der Stutzen 9 hat dabei einen geringeren Durchmesser als der Innendurchmesser des Aufnahmeelementes 7, in das er von oben hineinragt.

Das Aufnahmeelement 7 weist am inneren Rand seiner oberen Stirnfläche eine über den gesamten Umfang sich in Form einer Ringnut erstreckende, nach oben geöffnete Ausnehmung 11 auf, die bis zu einer unterhalb der oberen Ebene des Aufnahmeelementes 7 liegenden Höhe mit Wasser 12 gefüllt ist. Innenseitig ist die Ausnehmung 11 durch einen Kragen 13 begrenzt, dessen oberer Rand sich oberhalb der oberen Stirnseite des Aufnahmeelementes befindet.

An den Trichter 8 ist eine sich nach unten erstreckende, stegförmige Dichtlippe 14 angeformt, die mit ihrem unteren Ende in das in der Ausnehmung 11 befindliche Wasser 12 eintaucht. Die Dichtlippe 14 ist dabei über ihren gesamten Umfang dicht mit der Außenseite des Trichters 8 verbunden, so daß der innenseitige Bereich der Dichtlippe 14 von dem außenseitigen Bereich durch das Wasser 12 gas- und staubdicht getrennt ist. Das Aufnahmeelement 7 sowie die Zuführeinrichtung 10 können vorzugsweise als Blechteilkonstruktion ausgeführt oder aus Kunststoff gegossen sein.

In der Dichtlippe 14 befinden sich zwei diametral gegenüberliegende Abluftstutzen 15, durch die die beim Befüllen der Behälter 1 vom eingebrachten Schüttgut verdrängte Luft abströmen kann. An die Abluftstutzen 15 können jeweils nicht dargestellte Abluftleitungen angeschlossen werden, deren freie Enden von oben in den ebenfalls nicht dargestellten großen Vorratsbehälter münden.

Die Behälter 1 werden über einen pneumatisch betätigbaren Dichtschlauch 16 an dem Aufnahmeelement 7 in abgedichteter Weise festgeklemmt. Zwischen dem Gestell 2 und dem Fundament 17 sind zwei Wägezellen 18 angeordnet, durch die bei sehr geringen Wegverschiebungen von maximal 0,1 mm das Gewicht des abgefüllten Schüttgutes ermittelbar ist. Derartige mit Dehnungsmeßstreifen arbeitende Wägezellen 18 sind an sich bekannt und können auch an anderen geeigneten Stellen der gesamten Abfüllanlage angeordnet sein. Die bei Wegverschiebungen von maximal 0,1 mm auftretende Änderung der auf die Wägezellen 18 wirkenden Auftriebskraft ist vernachlässigbar gering und sehr viel kleiner als beispielsweise bei Abdichtungen mittels Faltenbälgen auftretende, das Wägeergebnis verfälschende Kraftänderungen.

## Patentansprüche

1. Vorrichtung zur gasdichten Abdichtung zwischen einer Zuführung für fließfähige Medien oder rieselfähiges Schüttgut und einem Behälter, in den das Medium bzw. das Schüttgut insbesondere nach einem vorbestimmten Gewicht abgefüllt wird, umfassend ein Aufnahmeelement, an das die Einfüllöffnung eines Behälters abgedichtet anschließbar ist, und eine Zuführeinrichtung, die von oben in das Aufnahmeelement eingreift,
**dadurch gekennzeichnet,**
daß das Aufnahmeelement (7) eine die Zuführeinrichtung (10) umgebende und nach oben geöffnete Ausnehmung (11) aufweist, in die eine Flüssigkeit (12) gefüllt ist, und daß die Zuführeinrichtung (10) eine nach unten gerichtete, über den gesamten Umfang der Ausnehmung (11) sich erstreckende Dichtlippe (14) aufweist, die in die Flüssigkeit (12) eintaucht.

2. Vorrichtung nach Anspruch 1, **dadurch gekennzeichnet,** daß die Zuführeinrichtung (10) einen Trichter (8) mit einem in das Aufnahmeelement (7) eingreifenden Stutzen (9) umfaßt.

3. Vorrichtung nach Anspruch 1 oder 2, **dadurch gekennzeichnet,** daß die Dichtlippe (14) an die Zuführeinrichtung (10), insbesondere an den gegebenenfalls vorhandenen Trichter (8) angeformt ist.

4. Vorrichtung nach einem der vorherigen Ansprüche, **dadurch gekennzeichnet,** daß die Zuführeinrichtung (10) mindestens einen Abluftstutzen (15) aufweist, durch den die beim Befüllen aus einem Behälter (1) entweichende Luft abführbar ist.

5. Vorrichtung nach einem der vorherigen Ansprüche, **dadurch gekennzeichnet,** daß an dem Aufnahmeelement (7) Mittel zum Anhängen eines Behälters (1) derart vorgesehen sind, daß der Behälter (1) von dem Aufnahmeelement (7) getragen ist.

6. Vorrichtung nach Anspruch 5, **dadurch gekennzeichnet,** daß die Mittel zum Anhängen eines Behälters (1) einen pneumatisch betätigbaren Dichtschlauch (16) umfassen.

7. Vorrichtung nach einem der vorherigen Ansprüche, **dadurch gekennzeichnet,** daß in die Vorrichtung eine Wägeeinrichtung (18) zum Wiegen des in einen Behälter (1) abgefüllten Mediums bzw. Schüttguts integriert ist.

8. Vorrichtung nach einem der vorherigen Ansprüche, **dadurch gekennzeichnet,** daß die Flüssigkeit Wasser, vorzugsweise destilliertes Wasser ist.

9. Vorrichtung nach einem der vorherigen Ansprüche, **dadurch gekennzeichnet,** daß die Flüssigkeit eine antiseptische Flüssigkeit ist.

10. Vorrichtung nach einem der vorherigen Ansprüche, **dadurch gekennzeichnet**, daß die Flüssigkeit Öl oder eine Wasser-Öl-Emulsion ist.
